# EUROPÄISCHE PATENTSCHRIFT

(11) **EP 2 196 438 B1**
(45) Veröffentlichungstag und Bekanntmachung des Hinweises auf die Patenterteilung: **20.11.2013**
(21) Anmeldenummer: 09015350.3
(22) Anmeldetag: 11.12.2009
(51) Int. Cl.: C02F 3/00, C02F 3/30

(54) **Verfahren zur belastungsabhängigen Regelung der Nitrifikation und Denitrifikation in Abwasserbehandlungsanlagen mit vorgeschalteter Denitrifikation**
Method for load-independent regulation of nitrification and denitrification in waste water treatment facilities with advanced denitrification
Procédé de réglage de la nitrification et de la dénitrification en fonction de la charge dans des installations de traitement des eaux usées dotées d'une dénitrification de série

(30) Priorität: 06.03.2009 DE 102009011490; 11.12.2008 DE 102008061332
(43) Veröffentlichungstag der Anmeldung: 16.06.2010
(73) Patentinhaber: Envicon Klärtechnik Verwaltungsgesellschaft mbH, 46537 Dinslaken (DE)
(72) Erfinder: Bassfeld, Andreas, 46537 Dinslaken (DE); Springer, Matthias, 09126 Chemnitz (DE)
(74) Vertreter: Demski, Siegfried

(56) Entgegenhaltungen:
- EP-A1- 1 518 830
- RUEY-FANG YU, SHU-LIANG LIAW, CHENG-NAN CHANG, WAN-YUAN CHENG: "Applying real-time control to enhance the performance of nitrogen removal in the continuous-flow SBR system" WATER SCIENCE TECHNOLOGY, Bd. 38, Nr. 3, 1. Januar 1998 (1998-01-01) , Seiten 271-280, XP002571911
- YONGZHEN PENG, GUIBING ZHU: "Biological nitrogen removal with nitrification and denitrification via nitrite pathway" APPLIED MICROBIOLOGICAL BIOTECHNOLOGY, Bd. 73, 7. Oktober 2006 (2006-10-07), Seiten 15-26, XP002571912

## Beschreibung

Die Erfindung betrifft ein Verfahren zur belastungsabhängigen Anpassung der Nitrifikations- und Denitrifikationsphase bei der weitergehenden biologischen Abwasseraufbereitung im Hauptstromverfahren mit mindestens einer kontinuierlich arbeitenden Nitrifikationszone für eine kaskadenförmige Beckenanordnung mit vorgeschalteter Denitrifikation unter Verwendung von zumindest einer Belüftungseinrichtungwobei durch Echtzeitauswertung von verfahrenstechnisch und energetisch relevanten Parametern der Sauerstoffeintrag der Belüftungseinrichtung gezielt belastungsabhängig einzelnen Becken oder Beckenabschnitten zugeführt und somit im freien Wechsel ein intermittierender Betrieb einzelner Becken oder Beckenabschnitte erreicht wird.

Verfahren zur Klärung von Abwässern sehen im Allgemeinen vor, die Abwässer, die in einem biologischen Prozess gereinigt werden sollen, zumindest partiell zu belüften. Dazu werden in zeitlich alternierender Abfolge Belüftungsphasen eingeleitet, die sich dadurch auszeichnen, dass in die Abwässer Sauerstoff eingetragen wird. Dabei wird die Belüftung in der Regel mit Druckbelüftung mit Gebläsen oder Turboverdichtem oder durch Oberflächenbelüftung mit Mammutrotoren oder Kreiselbelüftern erreicht und Umgebungsluft, die Sauerstoff enthält, in das Abwasser eingetragen. Hintergrund dieses Vorgehens ist, die anteilig im Abwasser vorhandenen Ammoniumverbindungen durch Oxidation in Nitrat zu überführen. Insofern spricht man bei dem Belüftungsvorgang auch von einer Nitrifikationsphase, während die Phase ohne Belüftung bis zum vollständigen Nitritabbau als Denitrifikationsphase bezeichnet wird. Danach kann räumlich oder zeitlich eine anaerobe Phase (Bio-P-Elimination) folgen, wenn keine erneute Belüftung unmittelbar erfolgt. Zu Beginn der Nitrifikationsphase werden gleichzeitig Kohlenstoffverbindungen abgebaut.

Es ist entscheidend für die weitergehende biologische Stickstoffelimination, dass dem Klärprozess nach der Nitrifikationsphase eine Denitrifikationsphase folgt, damit das entstandene Nitrat durch spezielle Mikroorganismen zu elementarem Stickstoff reduziert wird. Die für diese Phase wichtigen Mikroorganismen haben die Eigenschaft unter Ausschluss von Gelöstsauerstoff und Anwesenheit von verfügbaren Kohlenstoffverbindungen (ermittelt über den Chemischen Sauerstoffbedarf CSB; Biologischen Sauerstoffbedarf BSB), das in der Nitrifikationsphase gebildete Nitrat umzusetzen. Die verfahrenstechnische Gestaltung der Denitrifikationsphase ist bei Anlagen mit vorgeschalteter Denitrifikation räumlich und bei Anlagen mit wechselnder Beckennutzung (intermittierende Belüftung, alternierender Beschickung oder im Aufstaubetrieb) zeitlich gelöst. Der Stand der Technik ist im Merkblatt M 268 "Steuerung und Regelung der Stickstoffelimination beim Belebungsverfahren" der Deutschen Vereinigung für Wasserwirtschaft, Abwasser und Abfall e.V. (DWA) beschrieben.

Während die Stellgrößen zur Verfahrensführung bei Anlagen mit vorgeschalteter Denitrifikation im Wesentlichen auf "Sauerstoffzufuhr", "Rezirkulationsstrom" sowie "Dosierte C-Fracht (Kohlenstoff -Quelle)" beschränkt sind, steht für die Anlagen mit wechselnder Beckennutzung die Stellgröße "Belüftetes Volumen" zusätzlich zur Verfügung.

### Anlagen mit vorgeschalteter Denitrifikation

Grundsätzlich sind heute die Nitrifikationszonen mit Sauerstoffregelungen ausgestattet und die Sauerstoffsollwerte in Fließrichtung abgestuft. Weitere Regler mit fest eingestellten Sollwerten basieren einzeln oder in Kombination auf den Parametern Ammonium-, Nitrat- sowie Phosphorkonzentration oder auf organischen Summenparametern wie Totaler Organischer Kohlenstoff (TOC) oder CSB. So ist unter anderem aus der DE 41 34 124 A1 ein Verfahren zum Steuern des Betriebs eines Umlaufbeckens zur biologischen Abwasserreinigung bekannt, bei dem die Belüftungseinrichtungen zwischen dem Zulauf und Ablauf angeordnet sind und kontinuierlich mit konstanter Leistung betrieben werden. Die stromauf nächstgelegene Belüftungseinheit wird abhängig vom Ammoniumstickstoffgehalt in Betrieb gesetzt. Nachteilig bei diesem Ansatz ist, dass das alleinige Ziel die Sicherstellung der Nitrifikationsleistung ist und die fest eingestellten Schaltwerte schwerlich nur die bestehende Bandbreite der Belastungsschwankungen hinsichtlich einer optimalen Stickstoffelimination abdecken können.

Die Sollwertvorgabe beruht bei solchen Systemen in der Regel auf Erfahrungswerten und die ermittelten Istwerte weisen auf Grund der Messprinzipien eine Zeitverzögerung auf.

Die DE 102 31 908 A1 offenbart ein Verfahren zur lastabhängigen selbstparametrisierenden Regelung der Belüftung von Kläranlagen, wobei ein aus dem Parametern Redoxpotential und/oder pH-Wert je nach Belastung ermittelter variabler Sollwert für eine Sauerstoffregelung verwendet wird. Nachteilig ist bei diesem Ansatz, dass die Denitrifikationsleistung durch die bleibende starre Volumenaufteilung nicht deutlich verbessert wird. Dies ist auch das bestehende Problem für die bisher bekannten Ansätze bei modellbasierten und zum Teil prädiktiven Regelsystemen, wie neuronale Netze oder simulationsbasierte Regler.

Weiterhin ist die Nutzung einer so genannten 'Wechselzone' auf vielen Anlagen mit vorgeschalteter Denitrifikation bekannt, welche zwischen der Denitrifikationszone und Nitrifikationszone angeordnet ist. Diese Wechselzonen sind mit Belüftungseinrichtungen und Rührwerken ausgerüstet und werden zur Kompensation der temperaturabhängigen Nitrifikationsprozesse verwendet. Die Betriebsweise dieser Wechselzonen kann durch manuelle Vorgabe oder automatisch über direkte Erfassung von NH4-N und/oder N03-N im Ablauf der Belebungsstufe erfolgen. Dabei handelt es sich in der Regel um strategische, dass heißt mittelfristige Entscheidungen, der Begriff "intermittierender Betrieb" kann für derartige Anlagen nicht angewandt werden. Seit einigen Jahren wird an der Anpassung von Fuzzy-Logic-Reglern für Anlagen mit vorgeschalteter Denitrifikation gearbeitet (Korrespondenz Abwasser Nr. 7/2003, Seiten 901-907). Zwar konnte mit diesem Ansatz eine Aktivierung/Deaktivierung der Wechselzone und der anschließenden ersten Nitrifikationszone durchgeführt werden, aber der entscheidende Durchbruch zur wesentlichen Beeinflussung der Nitratwerte nicht erzielt werden. So ist trotz einer Vielzahl von 273 WENN-DANN-Regeln weiterhin das Problem der Sauerstoffverschleppung und Konzentrationsreduzierung durch Verdünnung in dem vorgeschalteten Denitrifikationsbecken über die Rezirkulation nicht gelöst.

### Intermittierend betriebene Anlagen

Bei intermittierend betriebenen Anlagen kann der Start der Denitrifikationsphase in der Regel durch das Abschalten der Belüftungseinrichtung erfolgen. Die möglichst präzise Ermittlung der Schaltkriterien für die Nitrifikations- und Denitrifikationszeiten ist Grundlage einer hohen Regelgüte und kann durch eine Reihe von unterschiedlichen Auswertungsansätzen verschiedener Parameter erfolgen.

Beispielsweise offenbart die DE 38 35 374 C2 ein Verfahren für ein Belebungsbecken, indem die Zeiten für den notwendigen Sauerstoffeintrag für die Nitrifikation und Denitrifikation aus der spezifischen Leistung und Betriebsdauer der zugeordneten Belüftungseinrichtung abgeleitet wird. Nachteil dieses Ansatzes ist, dass die Abbaugeschwindigkeiten von Nitrifikation und Denitrifikation sich bei unterschiedlichen Abwassertemperaturen im Belebungsbecken zum Teil sehr deutlich ändern. Somit ist die präzise Schaltpunkterkennung nicht immer zuverlässig gegeben.

Weiterhin offenbart die DE 41 40 915 A1 ein Verfahren für ein einstufiges Belebungsbecken in intermittierender Betriebsweise, bei dem die erfassten Daten in unscharfe Variablen überführt und mittels eines Fuzzy-Logic-Verfahrens die Zeiten für Nitrifikation und Denitrifikation ermittelt werden. Nachteil dieses Verfahrens ist die notwendige interne Gewichtung gegenläufiger Regeln (zum Beispiel bewirkt ein hohes Schlammalter gute Abbauleistung, aber auch einen hohen Energiebedarf für die Belüftung) sowie die bestehende Empfindlichkeit gegenüber dem alterungsbedingten Driften der erfassenden Messsonden und/oder Kalibrationsfehlern, da die Regeln für die Überführung scharfer IstWerte in unscharfe Variablen starr festgelegt sind.

Aus der DE 198 19 875 A1 ist ein Verfahren zum Steuern und Regeln der Belüftung von intermittierenden Kläranlagen bekannt, wobei in einem einzelnen Becken schmutzfrachtabhängig die jeweils richtigen Zeitpunkte für die Nitrifizierung und Denitrifizierung erkannt werden. Mit Hilfe der Fuzzy-Pattem-Klassifikation werden Merkmale aus den Signalzeitreihen verschiedener Parameter in einer Lernphase gewonnen und in der Anwendungsphase für die Berechnung der jeweils optimalen Schaltzeitpunkte verwendet. Es wird jedoch keine Aussage zum Einsatz dieser Technik bei Anlagen mit vorgeschalteter Denitrifikation getroffen.

Die DE 198 27 877 A1 offenbart eine Prozessoptimierung einer nach dem Belebungsverfahren arbeitenden Kläranlage mit einem Belebungsbecken, wobei die erfassten Zu- und Ablaufwerte des Belebungsbeckens sowie auch weitere Prozessparameter einen trainierten neuronalen Netz zugeführt werden und von diesem Vorhersagewerte der Ablaufwerte ermittelt werden. Die ermittelten Vorhersagewerte werden im Sinne einer prädiktiven Regelung der Kläranlage von einem Fuzzy-(Logic)-Regler verarbeitet und unter anderem zur Steuerung der Belüftung verwendet. Eine Aussage zum Einsatz dieser Technik bei Anlagen mit vorgeschalteter Denitrifikation wird ebenfalls nicht empfohlen.

Weiterhin aus dem Stand der Technik bekannt, das Verfahren zur Reinigung phosphathaltiger Abwasser mittels biologischer Phosphorelimination eingesetzt werden. So ist in der DE 36 44 770 C1 ein Verfahren bekannt, bei der zur Verbesserung der unter anaeroben Bedingungen ablaufenden Phosphatrücklösung Klärschlamm in ungeklärtes Rohwasser eingebracht wird, sodass eine Phosphorelimination in der Größenordnung von 90% erzielt wird. Hiernach erfolgt die Messung der Phosphorelimination nicht durch Bewertung eines kontinuierlichen Signalverlaufs, sondern es werden Mengenangaben eines Phosphorgehaltes in einer Kläranlage angegeben, die unterschiedliche Absolutwerte umfassen.

Aus der Publikation XP 002571911 (1998, published by Elsevier Sciene Ltd.) ist ein Regelungsverfahren für Kläranlagen bekannt, bei dem unter Verwendung des Redoxpotentials und des pH-Wertes eine Regelung vorgenommen wird. Zur Eintrag des notwendigen Sauerstoffes wird hierbei eine Belüftungseinrichtung ein- oder ausgeschaltet.

Aus der EP 1 518 830 A1 ist ebenfalls ein Verfahren zur lastabhängigen, selbstparametrierenden Regelung der Belüftungs von Kläranlagen bekannt. Auch bei dieser Regelung wird das Redoxpotenzial und der pH-Wert herangezogen, um mit Hilfe eines PID-Reglers einen Sauerstoffeintrag in einzelne Beckenabschnitte vorzunehmen. Bei diesem Verfahren wird ebenfalls der Sauerstoffeintrag durch ein- oder ausschalten eines Gebläses vorgenommen.

Insbesondere bei Kläranlagen über 20.000 Einwohner wird häufig das verfahrenstechnische Konzept einer vorgeschalteten Denitrifikation angewandt. Je nach Anforderung können dabei unterschiedliche Ausführungsformen verwendet werden. In verschiedenen Becken oder Beckenabschnitten (Kaskaden, Zonen) werden somit die Bedingungen für die gewünschten biologischen Abbaureaktionen geschaffen. Zudem erfolgt die Ausführung der Belebung häufig in einer kaskadenförmigen Beckenanordnung, beispielsweise in Form von Rechteckbecken. Rundbecken mit ringförmiger oder segmentartiger Unterteilung können ebenso zum Einsatz kommen. Neben bautechnischen Überlegungen ist es Ziel der Beckengestaltung einen idealen Pfropfenstromreaktor nachzubilden, dessen Vorteile in einem hohen Konzentrationsgradienten der abzubauenden Schadstoffe liegen. Dieser Ansatz ist eine Anwendung der bekannten Beziehung von Michaelis-Menten, welche beschreibt, dass höhere Substratausgangskonzentrationen zu einem erhöhten biologischen Umsatz führen. Die Übertragung dieser Erkenntnisse der Enzymkinetik auf das Wachstumsverhalten von Mikroorganismen (MO) erfolgte mit der Monod - Gleichung. Vereinfacht betrachtet, führt dieser erhöhte biologische Umsatz zu einem erhöhten Wachstum der entsprechenden Mikroorganismen.

Erfahrungsgemäß funktionieren die einzelnen Becken oder Kaskaden sehr zuverlässig, aber in der genannten Kombination werden die Nachteile dieses bisherigen Lösungsansatzes deutlich. In den Nitrifikationszonen wird durch autotrophe Mikroorganismen NH₄-N zu NO₃-N umgewandelt. Im Übergang zur Nachklärung ist somit NH₄-N minimal und N0₃-N maximal, Ziel wäre jedoch auch den Anteil NO₃-N minimal zu gestalten. Diese Maximalwerte können nur durch die Rezirkulation in die vorgeschalteten Denitrifikationszonen reduziert werden. Dazu wird das cirka 4-fache des Zulaufvolumenstromes wieder in die Denitrifikationszonen zurückgeführt. Hier erfolgt durch heterotrophe Mikroorganismen die Umwandlung von NO₃-N zu N₂. Ist gelöstes O₂ in der Denitrifikationszone vorhanden, wird die Abbaureaktion verlangsamt oder gehemmt. Auf Grund der verwendeten hohen Volumenströme beim Rezirkulationsvorgang (RZV) von 3 bis 4 ist häufig eine Verschleppung von O₂ aus der Nitrifikationszone zu beobachten und das natürliche CSB-Angebot wird unnötig reduziert und reicht nicht für eine zufriedenstellende Denitrifikation aus.

Mit einem RZV von circa 4 wiederum erreicht auf Grund der Verdünnung jedoch auch nur 1/5 der NH₄-N - Konzentration des Ablaufes der Vorklärung die Nitrifikationszonen, sodass kein maximaler Konzentrationsgradient entsteht. Erfahrungsgemäß kann daher die NH₄-N - Fracht innerhalb der Nitrifikationszonen sicher abgebaut werden und es kommt sehr häufig zum Überschwingen der O₂-Werte in der letzten Nitrifikationszone. Der ursprüngliche Ansatz einer höheren Umsatzleistung durch ein höheres Substratangebot wird weitgehend negiert. Im Ablauf der Nitrifikationszone verbleibt somit 1/5 der ursprünglichen Stickstofffracht als NO₃-N - Konzentration. Diese liegt erfahrungsgemäß bei cirka 6 bis 15 mg/l. Eine weitere Absenkung des NO₃-N wäre mit diesem Ansatz nur über eine weitere Erhöhung des RZV möglich, welche aber einerseits die O₂-Verschleppung andererseits den Anstieg der Förderkosten erhöht. Über den Rücklaufvolumenstrom (RV) von cirka 1 erreichen diese NO₃-N - Konzentrationen, mit Ausnahme der Anlagen mit separatem Rücklaufschlamm-Denitrifikations-Becken (RS-Deni) die Bio-P-Zone (biologische Phosphoreliminitation), wo wiederum NO₃-N als reaktionshemmend auftritt.

Der Erfindung liegt die Aufgabe zugrunde, die vorgenannten Nachteile des Standes der Technik zu überwinden und ein Verfahren für Anlagen mit vorgeschalteter Denitrifikation vorzuschlagen, dass ein Regelungskonzept beinhaltet, um für jeweils unterschiedliche Belastungszustände eine sichere Nitrifikation zu gewährleisten und eine optimale Stickstoffelimination zu erreichen.

Erfindungsgemäß wird die Aufgabe durch das Verfahren gemäß Anspruch 1 gelöst. Weitere vorteilhafte Ausgestaltungen des Verfahrens ergeben sich aus den Unteransprüchen.

Je nachdem wie hoch die Belastung des Abwassers mit organischen Verunreinigungen wie Ammoniumverbindungen etc. ist, erfolgt eine Belüftung eines Beckens oder eines Beckenabschnittes, um eine Nitrifikation einzuleiten. Dies erfolgt unter Verwendung zumindest einer ständig laufenden Belüftungseinrichtung, vorzugsweise eines Turbogebläses, das über den Lufteintrag den Sauerstoff für die notwendige Oxidation der Ammoniumverbindungen zur Verfügung stellt, wobei auch mehrere Turbogebläse für eine ausgewählte Anzahl von Becken einsetzbar sind. Da eine vollständige Nitrifikation zur Folge hat, dass zwar der gesamte Anteil der Ammoniumverbindungen oxidiert werden kann, ein Teil des Nitrats jedoch nicht aus den kaskadenförmigen Becken entfernt werden kann, wird eine Belüftung einzelner Becken oder Beckenabschnitte belastungsabhängig dann beendet, wenn ein gewünschter Nitrifikationsgrad erreicht ist und eine ebenfalls belastungsabhängige Denitrifikation eingeleitet. Dadurch wird eine Belastung des geklärten Abwassers mit zu hoher Nitratfracht vermieden, wobei sich die verbleibende Ammoniumkonzentration im Bereich der gesetzlichen Vorgaben hält.

Für die zu regelnden kaskadenförmigen Becken bilden sich mehrere Nitrifikations- und Denitrifikationsphasen pro Tag heraus. Die Erkennung des Endes von Nitrifikations- und Denitrifikationsphase erfolgt über ein statistisches Mustererkennungsverfahren, vorzugsweise die Fuzzy-Muster-Klassifikation (Fuzzy-Pattern) der Parameterverläufe von Redoxpotential, pH-Wert, Gelöstsauerstoff, Ammoniumgehalt, Nitritgehalt, Nitratgehalt und/oder Belüftungsleistung zum Beispiel über Schieberstellung, Durchflussmessungen, Massestromerfassung sowie möglicher weiterer Parameter wie NH₄-N-, NO₂-N -, NO₃-N - und PO₄-P - Onlinemessungen. Wie in dem Verfahren zur Regelung der Belüftung für intermittierende Klärwerke (DE 198 19 875) gezeigt wurde, sind diese Parameter und der gewählte Auswertungsansatz für die Beschreibung der ablaufenden Reaktionen im Belebungsbecken sehr gut geeignet. Dabei wird in einer Lemphase eine ausreichende Zahl von Zyklen innerhalb der Tagesgänge eines erfassten Signale vorverarbeitet, vorzugsweise normiert und die entsprechenden Merkmale zunächst extrahiert, dann reduziert und die Klassifikation zunächst manuell durchgeführt. Der bei diesem Prozess gebildete Klassifikator wird in der anschließenden Arbeitsphase zum Mustervergleich des tatsächlichen Abbauprozesses verwendet. Aufgrund der unterschiedlichen Reaktionsabläufe für die Nitrifikations- und Denitrifikationsphase ergeben sich für die oben genannten Parameter verschiedene Klassifikatoren für die Nitrifikation und Denitrifikation. Die Regeleinheit kann nun mit den erstellten Klassifikatoren in der Arbeitsphase der Mustererkennung die Erkennung des Endes der Prozessphasen anhand einzelner Parametern oder in Kombination von Parametern gezielt durchführen. Durch den Einsatz dieser Technologie werden die bestehenden Probleme des Standes der Technik bei der Signalauswertung bezüglich der unvermeidlichen Alterung, dem Driften und möglichen systematischen Fehlern bei der Kalibrierung der Sonden überwunden.

In weiterer Ausgestaltung der Erfindung ist vorgesehen, dass im Sinne eines unterbrechungsfreien Betrieb des Gebläses eine automatische Umschaltung einzelner zu regelnder Becken oder Beckenabschnitte von der aktuellen Denitrifikationsphase in eine Nitrifikationsphase erfolgt, wenn das Ende der belüfteten Phase in einem anderen Becken oder Beckenabschnitt erkannt wurde und die Denitrifikationsphase eingeleitet wird. Durch die automatische Umschaltung der Belüftungseinrichtungen wird der Betrieb von Turbogebläsen ermöglicht, welche einen hohen Anlaufstrom benötigen und in der Regel für einen kurzzeitigen Betrieb nicht geeignet sind.

Ferner ist vorgesehen, dass eine automatische Umschaltung einzelner Becken oder Beckenabschnitte in eine Denitrifikationphase erfolgt, wenn das angeforderte Sauerstoffprofil der Nitrifikationszonen über eine bestimmte Zeit einen minimalen Sauerstoffsollwert aufweist. Hierdurch wird vermieden, dass der Sauerstoff in den Nitrifikationszonen weiter abgesenkt werden muss und somit eine Verschlechterung des Wirkungsgrades bei dem erfindungsgemäßen Verfahren verursachen könnte.

In den ständig belüfteten Nitrifikationszonen wird ein Teil des NH₄-N bereits durch autotrophe Mikroorganismen von NH₄-N zu NO₃-N umgewandelt. Die zu regelnden Nitrifikationszonen unterstützen während der Nitrifikationsphase den NH₄-N - Abbau solange, bis das Ende der Nitrifikation (NH₄-N = 0 mg/l) erreicht ist. Am Ende dieser Phase ist im Übergang zur Nachklärung NH₄-N kurzfristig minimal und NO₃-N maximal. Durch das unmittelbare Abstellen der Belüftung der zu regelnden Nitrifkationszonen wird einerseits ein unnötig störendes Überschwingen des O₂-Wertes vermieden und andererseits durch die zeitlich begrenzte Erweiterung der Denitrifikationszone der NO₃-N Abbau deutlich verbessert. Die zu regelnden Nitrifikationszonen unterstützen während der Denitrifikationsphase den NO₃-N - Abbau solange, bis das Ende der Denitrifikation (z.B. NO₃-N = 0 mgll) erreicht oder weitestgehend erreicht ist. Am Ende dieser Phase ist im Übergang zur Nachklärung NO₃-N kurzfristig minimal und NH₄-N maximal.

Durch die belastungsabhängige Rezirkulation wird nunmehr nur das circa 1 bis 4-fache des Zulaufvolumenstromes wieder den Denitrifikationszonen zugeführt. Hier erfolgt durch heterotrophe Mikroorganismen die Umwandlung von NO₃-N zu N₂. Die bisher beobachtete Verschleppung von O₂ aus der letzten Nitrifikationszone während der Nitrifikationsphase wird mit dieser Lösung strikt vermieden, da bereits mit Erzielen der vollständigen Nitrifikation die Belüftung abgestellt wird, bevor das Überschwingen des O₂ eintreten kann. Somit kann auch während der Nitrifikationsphase in den zu regelnden Nitrifikationszonen die Denitrifikation in den vorgeschalteten Denitrifikationszonen ungestört ablaufen. Gegen Ende der Nitrifikationsphase in den zu regelnden Nitrifikationszonen stellt sich kurzfristig eine maximale Belastung der vorgeschalteten Denitrifikationszone mit NO₃-N ein, was ein Maximum der Umsatzleistung der Denitrifikation bewirkt.

Mit Beginn der Denitrifikationsphase in den zu regelnden Nitrifikationszonen fällt die NO₃-N - Konzentration in dem Rezirkulationsvolumenstrom ab. Nähert sich die Denitrifikationsphase dem Ende, wird der Rezirkulationsvolumenstrom zunehmend NO₃-N - frei und in den vorgeschalteten Denitrifikationszonen stellt sich kurzfristig eine anaerobe Zone ein. Diese dient, zwar zeitlich begrenzt, der effektiven Unterstützung der vorhandenen Bio-P-Zone. Weiterhin kann während der Denitrifikationsphase in den zu regelnden Nitrifikationszonen eine Anhebung der Konzentration des Belebtschlammes (Trockensubstanzgehalt TS) durch einen verminderten Energieeintrag erzielt werden, die einen geeigneten Puffer für mögliche Stoßbelastungen der folgenden Nitrifikationsphase darstellt.

Durch die Einführung des intermittierenden Betriebes der zu regelnden Becken oder Beckenabschnitte ergeben sich typische Konzentrationsschwingungen für die schadstoffrelevanten Parameter NH₄-N und NO₃-N im Ablauf des letzten Beckens oder Beckenabschnittes. Die Verbesserungen der verfahrenstechnisch relevanten Parameter ist auf die effektivere Nutzung der Beziehung von Michaelis-Menten sowie Monod zurückzuführen, da nunmehr durch eine zeitliche Änderung der Substratkonzentrationen in den intermittierend betriebenen Becken deutlich höhere Umsatzleistungen und Wachstumsraten erzielt werden können.

Weitergehend soll der O₂ - Sollwert der durchgehend belüfteten Nitrifikationszonen derart beeinflusst werden, dass bei Fehlschlagen der Erkennung des Endes der Nitrifikation in den zu regelnden Nitrifikationszonen, zum Beispiel Rückfall auf eine maximale Nitrifikationszeit, eine schrittweise Anhebung des O₂ - Sollwertes um einen bestimmten Wert, zum Beispiel 0,5 mg/l, erfolgen. Dies führt zu einem belastungsabhängigen dynamischen Profil der O₂-Sollwerte. Wird das Ende der Nitrifikation im nächsten Nitrifikationszyklus wieder erkannt, erfolgt eine entsprechende Absenkung.

Weitergehend sollen die vorhandenen Wechselzonen der kaskadenförmigen Becken automatisch der Nitrifikation zugeschaltet werden, wenn das angeforderte O₂ - Profil über eine bestimmte Zeit auf maximalen O₂ - Sollwerten steht. Ebenso erfolgt eine automatische Umschaltung der Wechselzone auf Denitrifikation, wenn das angeforderte O₂ - Profil über eine bestimmte Zeit auf normalen O₂ - Sollwerten steht.

Ferner soll in den zu regelnden Nitrifikationszonen die belastungsabhängig eingeführte Denitrifikation sofort beendet werden, wenn der Zulaufvolumenstrom der Kläranlage einen vorgegebenen Wert übersteigt oder ein deutlicher Anstieg des NH₄-N oder des pH-Wertes im Zulauf zu verzeichnen ist.

Weitergehend soll das Rezirkulationsverhältnis derart beeinflusst werden, dass bei Fehlschlagen der Erkennung des Endes der Denitrifikationsphase in dem zu regelnden Nitrifikationszonen eine schrittweise Absenkung des Rezirkulationsverhältnisses erfolgt. Dadurch wird vermieden, dass bei einem zeitlich begrenzten Unterangebot an CSB / BSB im Zulauf der Belebungsstufe unnötige Mengen nitratreichen Abwassers rezirkuliert werden. Kommt es im nächsten Zyklus wieder zur Erkennung des Endes der Denitrifikationsphase erfolgt eine entsprechende Anhebung.

Ferner soll bei Anlagen mit einem ungünstigen Kohlenstoff/Stickstoff-Verhältnis eine Ansteuerung einer aktiven oder passiven Dosierung einer internen oder externen Kohlenstoff-Quelle für die Unterstützung der Denitrifikation erfolgen. Der Regler gleicht durch sein Schaltverhalten kurzfristige Änderungen in der Quantität und Qualität der Kohlenstoff-Quelle aus.

Die Vorteile der Regelung liegen in der deutlich verbesserten Ausnutzung des vorhandenen Nährstoffverhältnisses von Kohlenstoff / Stickstoff durch eine verbesserte Denitrifikationsleistung bei gleichzeitiger Sicherstellung einer ausreichenden Nitrifikationsleistung. Somit werden die Ablaufwerte für Gesamtstickstoff sowie der Einsatz der Energiekosten für die Belüftung optimiert. Bestehende Anlagen weisen bei Anwendung des Verfahrens ein besseres Pufferverhalten bei Belastungsstößen auf. Bei Anlagen, die erweitert oder neu errichtet werden, kann die bisherige Auslegung auf Spitzenbelastungswerte sowie die Baukosten für weitere Denitrifikationsbecken deutlich reduziert werden.

Die Erfindung wird im Weiteren anhand der Figuren näher erläutert.

Es zeigt
- Fig. 1: ein Ablaufdiagramm der relevanten Parameter bei einer Kläranlage nach dem Stand der Technik und
- Fig. 2: ein Ablaufdiagramm der relevanten Parameter bei einem erfindungsgemäßen Verfahren.

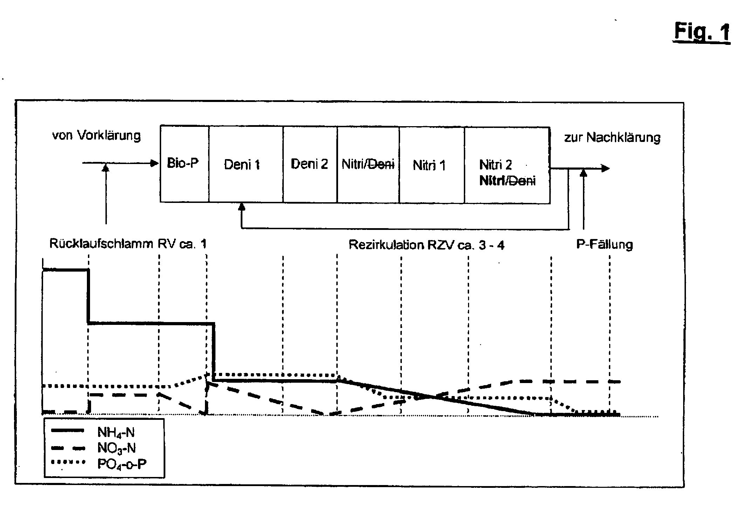

Figur 1 zeigt einen Ablauf relevanter Parameter bei einer Kläranlage nach dem Stand der Technik mit vorgeschalteter Denitrifikation mit fest zugeordneter Wechselzone (Betriebsweise Nitrifikation) ohne einen belastungsabhängigen Wechsel der Belüftungsphase. So ist zu erkennen, dass nach erfolgter Vorklärung und biologischer Phosphorelimination die Ammoniumkonzentration zu Beginn der Denitrifikationszone 1 durch die Rezirkulation bereits geklärten Abwassers stark verdünnt wird und die Nitratkonzentration entsprechend sprunghaft ansteigt. Während des Durchlaufens der Denitrifikationszone 1 und 2 erfolgt ein allmählicher stetiger Abbau des Nitrats bis zu einer Konzentration von c[NO₃]≈0, wohingegen die Ammoniumkonzentration annähernd gleich hoch bleibt. In der belüfteten Nitrifikationszone, mit beginnender Nitrifikation, wird die Konzentration an Ammoniumverbindungen stetig niedriger und erreicht zum Ende der Nitrifikationszone 2 einen Wert von c[NH₄]≈0. Im Gegensatz dazu ist die Nitratkonzentration umgekehrt proportional angestiegen. Das so zur Nachklärung bereit stehende Abwasser enthält infolgedessen einen hohen Anteil Nitrat, der im Rahmen der Rezirkulation dem ungeklärten Abwasser der Denitrifikationszone 1 teilweise wieder zugeführt wird.

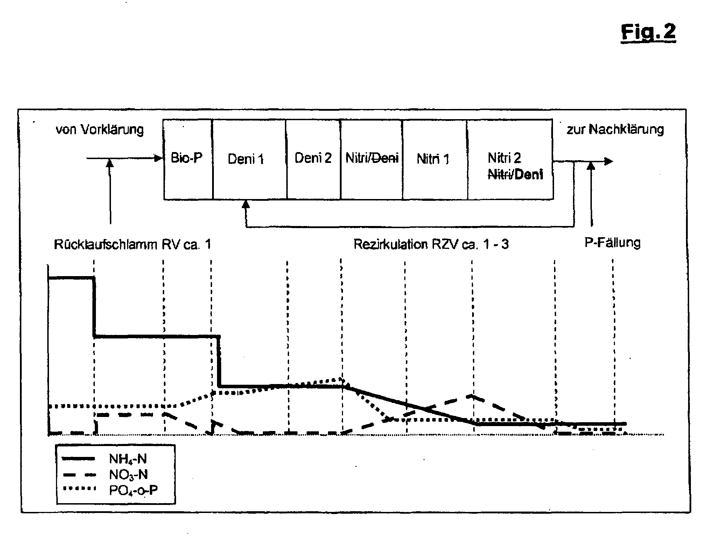

Figur 2 zeigt den Verlauf der ablaufrelevanten Parameter bei einer erfindungsgemäßen Kläranlage mit vorgeschalteter Denitrifikation mit fest zugeordneter Wechselzone (Betriebsweise Nitrifikation) und belastungsabhängigem Wechsel der Belüftungssphase (hier beispielhaft Nitrifikationszone 2) zu dem Zeitpunkt "Ende der Denitrifikationsphase" im zu regelnden Becken oder Beckenabschnitt. Nach erfolgter Vorklärung und biologischer Phosphorelimination wird die Ammoniumkonzentration zu Beginn der Denitrifikationszone 1 durch die Rezirkulation bereits geklärten Abwassers stark verdünnt. Allerdings wird durch den Verdonnungseffekt infolge der Rezirkulation des Abwassers mit zeitweise nur geringem Nitratgehalt nur ein geringer Anstieg der Nitratkonzentration zu Beginn der Denitrifikationszone 1 bewirkt. Nach Durchlaufen der Denitrifikationszone 1 und 2 ist die Konzentrationen von c[NO₃]≈0. In der unmittelbar folgenden Wechselzone und Nitrifikationszone 1 setzt mit der ständigen Belüftung die Nitrifikationsphase ein. Mit dem belastungsabhängigen Wechsel der Belüftung in der Nitrifikationszone 2 in die Denitrifikationsphase wird erreicht, dass die Ammoniumkonzentration nicht weiter absinkt. Ein komplettes Absinken der Ammoniumkonzentration auf Null wird somit verhindert, ebenso wie ein Anstieg der Nitratkonzentration auf eine der Ammoniumkonzentration entgegengesetzt proportionalen Höhe. Durch die einsetzende Denitrifizierung in der ursprünglichen Nitrifikationszone 2 wird nun das in der Nitrifikationszone 1 erhaltene Nitrat denitrifiziert, so dass die Nitratkonzentration auf c[NO₃]≈0 absinkt oder zumindest deutlich reduziert wird. Demgegenüber verändert sich die Ammoniumkonzentration nicht mehr, die jedoch innerhalb der gewünschten, gesetzlichen Grenzen bleibt. Das so zur Nachklärung bereitstehende Abwasser enthält daher annähernd kein Nitrat mehr und nur einen geringen Anteil Ammoniumverbindungen, die im Rahmen der Rezirkulation dem ungeklärten Abwasser in der Denitrifikationszone 1 teilweise wieder zugeführt werden.

Die Regeleinheit würde nun als nächsten Schritt die Nitrifikationsphase in dem zu regelnden Becken oder Beckenabschnitt (hier Nitrifikationszone 2) belastungsabhängig einleiten und somit eine intermittierende Betriebsweise erzeugen.

Eine weitere vorteilhafte Ausführung der Regeleinheit besteht im freien Wechsel der zu regelnden Nitrifikationszone, die im Sinne eines Rotationsprinzips oder abhängig von der erzielten Reinigungsleistung und/oder des Energieverbrauches zwischen den verfügbaren Nitrifikationszonen die intermittierende Betriebsweise wechselt. Bezogen auf die Darstellung der Figur 2 würde somit die Regeleinheit am Ende der Denitrifikationsphase (zu regelndes Becken oder Beckenabschnitt ist Nitrifikationszone 2) als nächsten Schritt die Nitrifikationsphase in einem anderen zu regelnden Becken oder Beckenabschnitt (nun Nitrifikationszone 1) belastungsabhängig einleiten.

## Patentansprüche

1. Verfahren zur belastungsabhängigen dynamischen Anpassung der Nitrifikations- und Denitrifikationsphase bei der weitergehenden biologischen Abwasseraufbereitung im Hauptstromverfahren durch eine belastungsabhängige Regelung für eine kaskadenförmige Beckenanordnung mit vorgeschalteter Denitrifikation mit mindestens einer kontinuierlich arbeitenden Nitrifikationszone unter Verwendung von zumindest einer Belüftungseinrichtung, wobei durch Echtzeitauswertung von verfahrenstechnisch und energetisch relevanten Parametern der Sauerstoffeintrag der Belüftungseinrichtung gezielt belastungsabhängig einzelnen Becken oder Beckenabschnitten zugeführt wird und somit im freien Wechsel ein intermittierender Betrieb einzelner Becken oder Beckenabschnitte erreicht wird,
**dadurch gekennzeichnet,**
**dass** der Sauerstoffeintrag zumindest einer ständig laufenden Belüftungseinrichtung, vorzugsweise eines Turbogebläses, durch eine Regeleinheit einzelnen Becken oder Beckenabschnitten unter Verwendung der Fuzzy-Pattern-Technologie auf Basis der Parameterverläufe (Klassifikatoren) zugeführt wird.

2. Verfahren nach Anspruch 1,
**dadurch gekennzeichnet,**
**dass** der Zeitpunkt für die Belüftung und die Belüftungsabschaltung von der Temperatur, dem pH-Wert, dem Redoxpotential, dem Gelöstsauerstoff, des Ammoniumgehalts, des Nitritgehaltes, des Nitratgehaltes, dem Luftvolumenstrom, Luftmassenstrom oder der Belüftungsleistung oder Stromaufnahme abhängt.

3. Verfahren nach einem der Ansprüche 1 oder 2,
**dadurch gekennzeichnet,**
**dass** ein unterbrechungsfreier Betrieb des Gebläses eine automatische Umschaltung einzelner zu regelnder Becken oder Beckenabschnitte von der aktuellen Denitrifikationsphase in eine Nitrifikationsphase erfolgt, wenn das Ende der belüfteten Phase in einem anderen Becken oder Beckenabschnitt erkannt wurde und die Denitrifikationsphase eingeleitet wird.

4. Verfahren nach einem der Ansprüche 1 bis 3,
**dadurch gekennzeichnet,**
**dass** eine automatische Umschaltung einzelner Becken oder Beckenabschnitte in eine Denitrifikationphase erfolgt, wenn das angeforderte Sauerstoffprofil über eine bestimmte Zeit einen Sauerstoffsollwert aufweist.

5. Verfahren nach einem der Ansprüche 1 bis 4,
**dadurch gekennzeichnet,**
**dass** durch die Regelsteuerung mit Beginn der Denitrifikation in den zu regelnden Nitrifikationszonen die NO₃-N Konzentration in der Rezirkulation belastungsabhängig beeinflusst wird.

6. Verfahren nach einem der Ansprüche 1 bis 5,
**dadurch gekennzeichnet,**
**dass** eine Verbesserung der Denitrifikation innerhalb der vorgeschalteten Denitrifikationszonen durch die strikte Vermeidung einer Verschleppung von Gelöstsauerstoff aus der jeweils letzten Nitrifikationszone erfolgt.

7. Verfahren nach einem Ansprüche 1 bis 6,
**dadurch gekennzeichnet,**
**dass** eine Anhebung des TS-Gehaltes während der Denitrifikationsphase in den zu regelnden Nitrifikationszonen durch einen verminderten Energieeintrag erfolgt.

8. Verfahren nach einem der Ansprüche 1 bis 7,
**dadurch gekennzeichnet,**
**dass** bei Fehlschlagen der Erkennung des Endes der Denitrifikation in der zu regelnden Nitrifikationszone eine schrittweise Absenkung einer Rezirkulation erfolgt.

9. Verfahren nach einem der Ansprüche 1 bis 8,
**dadurch gekennzeichnet,**
**dass** ein Anstieg des Ammoniums oder des pH-Wertes im Zu- und/oder Ablauf den Wechsel der Nitrifikations- und/oder Denitrifikationsphasen bewirkt.

10. Verfahren nach einem der Ansprüche 1 bis 9,
**dadurch gekennzeichnet,**
**dass** eine Denitrifikationsphase in der zu regelnden Nitrifikationszone sofort beendet wird, wenn der Zulauf- oder Ablaufvolumenstrom der Kläranlage einen vorgegebenen Wert übersteigt oder ein Anstieg des NH₄-N oder des pH-Wertes im Zulauf oder Ablauf festgestellt wird.

11. Verfahren nach einem der Ansprüche 1 bis 10,
**dadurch gekennzeichnet,**
**dass** bei Anlagen mit einem geringen Kohlenstoff/Stickstoffverhältnis eine Ansteuerung einer passiven oder aktiven Dosierung einer externen oder internen Kohlenstoffquelle für die Unterstützung der Denitrifikation erfolgt.

12. Verfahren nach einem Ansprüche 1 bis 11,
**dadurch gekennzeichnet,**
**dass** ein Teil der Nitrifikationszonen durchgehend belüftet und in einem weiteren Teilbereich für eine bestimmte Zeit vollständig abgeschaltet wird.

13. Verfahren nach einem Ansprüche 1 bis 12,
**dadurch gekennzeichnet,**
**dass** bei bestimmten Belüftungselementen, insbesondere Keramikbelüftern, ein Teil der Nitrifikationszonen durchgehend belüftet und in einem weiteren Teilbereich für eine bestimmte Zeit die Luftzufuhr auf einen Volumenstrom begrenzt wird, der sich aus dem unbedingt notwendigen Mindestöffnungswinkel der Luftschieber ergibt, so dass sich Verhältnisse der simultanen Denitrifikation einstellen.

14. Verfahren nach einem Ansprüche 1 bis 13,
**dadurch gekennzeichnet,**
**dass** der Eintrag des Sauerstoffes für die Nitrifikationszonen unterstützend oder ausschließlich über Reinsauerstoffbegasung oder auf elektrochemischem Wege erfolgt.

## Claims

1. Method for the contamination-dependent dynamic adjustment of the nitrification and denitrification phases in further biological waste water treatment in a main stream process by contamination-dependent control for a cascade-like basin arrangement with upstream denitrification with at least one continuously operating nitrification zone using at least one ventilation device, wherein the oxygen input of the ventilation device is, depending on contamination, selectively supplied to individual basins or basin sections by real-time evaluation of procedural and energetically relevant parameters, and thus an intermittent operation of individual basins or basin sections in alternation is achieved, **characterized in that** the oxygen input at least of one continuously running ventilation device, preferably a turbo blower, is supplied to individual basins or basin sections by a control unit using fuzzy pattern technology on the basis of the parameter characteristics (classifiers).

2. Method according to claim 1, **characterized in that** the point in time for ventilation and the switching-off of ventilation depends on temperature, the pH value, the redox potential, the dissolved oxygen, the ammonium content, the nitrite content, the nitrate content, the air volume flow rate, the air mass flow rate, or the ventilation power or current consumption.

3. Method according to one of claims 1 or 2, **characterized in that** an uninterrupted operation of the blower, an automatic change-over of individual basins or basin sections to be controlled from the current denitrification phase to a nitrification phase is effected when the end of the ventilated phase was detected in another basin or basin section, and the denitrification phase is initiated.

4. Method according to one of claims 1 to 3, **characterized in that** an automatic change-over of individual basins or basin sections to a denitrification phase is effected when the required oxygen profile exhibits a desired oxygen value for a certain time.

5. Method according to one of claims 1 to 4, **characterized in that** the NO₃-N concentration in the recirculation is influenced depending on contamination by closed-loop control at the beginning of denitrification in the nitrification zones to be controlled.

6. Method according to one of claims 1 to 5, **characterized in that** an improvement of denitrification within the upstream denitrification zones is accomplished by strictly avoiding an entrainment of dissolved oxygen from the respectively last nitrification zone.

7. Method according to one of claims 1 to 6, **characterized in that** an increase in the TS content during the denitrification phase in the nitrification zones to be controlled is accomplished by a reduced energy input.

8. Method according to one of claims 1 to 7, **characterized in that**, when the detection of the end of denitrification in the nitrification zone to be controlled fails, a stepwise decrease of recirculation is effected.

9. Method according to one of claims 1 to 8, **characterized in that** an increase in ammonium or the pH value in the inlet and/or outlet causes the alternation between the nitrification and/or denitrification phases.

10. Method according to one of claims 1 to 9, **characterized in that** a denitrification phase in the nitrification zone to be controlled is immediately terminated when the inlet or outlet volume flow rate of the waste water treatment plant exceeds a predetermined value, or when an increase in NH₄-N or the pH value are detected in the inlet or outlet.

11. Method according to one of claims 1 to 10, **characterized in that** in plants with a low carbon/nitrogen ratio, an activation of a passive or active dosing of an external or internal carbon source is accomplished for supporting denitrification.

12. Method according to one of claims 1 to 11, **characterized in that** a part of the nitrification zones is continuously ventilated, and is completely switched off for a certain time in a further partial area.

13. Method according to one of claims 1 to 12, **characterized in that** in certain ventilation elements, in particular in ceramic aerators, a part of the nitrification zones is continuously ventilated, while in a further partial area, air supply is restricted to a volume flow rate for a certain time, the volume flow rate resulting from the absolutely necessary minimum opening angle of the air valves, so that simultaneous denitrification conditions result.

14. Method according to one of claims 1 to 13, **characterized in that** the input of oxygen for the nitrification zones is supportively or exclusively effected via pure oxygen injection or electrochemically.

## Revendications

1. Procédé d'adaptation dynamique en fonction de la charge de la phase de nitrification et de dénitrification dans le traitement biologique approfondi des eaux usées dans le procédé de débit principal au moyen d'une régulation en fonction de la charge pour un système formant bassin en cascade avec dénitrification en amont avec au moins une zone de nitrifications fonctionnant en continu au moyen d'au moins un dispositif d'aération, l'introduction d'oxygène du dispositif d'aération étant amenée de manière ciblée en fonction de la charge aux différents bassins ou différentes sections de bassin au moyen de l'évaluation en temps réel de paramètres pertinents énergétiquement et en termes de technologie des procédés, parvenant ainsi à un fonctionnement intermittent en libre alternance des différents bassins ou différentes sections de bassin, **caractérisé par le fait que** l'introduction d'oxygène d'au moins un dispositif d'aération fonctionnant en permanence, préférentiellement un turbo-ventilateur, est amenée au moyen d'une unité de régulation à différents bassins ou différentes sections de bassin en utilisant la technologie de forme floue basée sur les profils de paramètres (classificateurs).

2. Procédé selon la revendication 1, **caractérisé par le fait que** le moment de l'aération et la désactivation de l'aération dépend de la température, du pH, du potentiel redox, de l'oxygène dissous, de la teneur en ammonium, de la teneur en nitrites, de la teneur en nitrates, du débit volumique d'air, du débit massique d'air, du degré d'aération ou de la consommation électrique.

3. Procédé selon l'une des revendications 1 ou 2, **caractérisé par le fait que**, en termes d'un fonctionnement sans interruption du ventilateur, une commutation automatique des différents bassins ou des différentes sections de bassin a lieu de la phase actuelle de dénitrification à une phase de nitrification lorsque la fin de la phase aérée a été reconnue dans un autre bassin ou une autre section de bassin et la phase de dénitrification est induite.

4. Procédé selon l'une des revendications 1 à 3, **caractérisé par le fait qu'**une commutation automatique de différents bassins ou différentes sections de bassin a lieu dans une phase de dénitrification lorsque le profil d'oxygène présente sur une période de temps déterminée une valeur de consigne d'oxygène.

5. Procédé selon l'une des revendications 1 à 4, **caractérisé par le fait que** la concentration en NO₃-N est influencée en fonction de la charge dans la recirculation au moyen de la commande de régulation avec le début de la dénitrification dans les zones de nitrification à réguler.

6. Procédé selon l'une des revendications 1 à 5, **caractérisé par le fait qu'**une amélioration de la dénitrification à l'intérieur des zones de dénitrification en amont a lieu en évitant de manière stricte une propagation d'oxygène dissous depuis la dernière zone respective de nitrification.

7. Procédé selon l'une des revendications 1 à 6, **caractérisé par le fait qu'**une élévation de la teneur en substances sèches pendant la phase de dénitrification a lieu au moyen d'un apport d'énergie réduit dans les zones de nitrification à réguler.

8. Procédé selon l'une des revendications 1 à 7, **caractérisé par le fait qu'**une réduction graduelle d'une recirculation a lieu en cas d'échec de la reconnaissance de la fin de la dénitrification dans la zone de nitrification à réguler.

9. Procédé selon l'une des revendications 1 à 8, **caractérisé par le fait qu'**une augmentation de l'ammonium ou du pH dans l'alimentation et/ou l'évacuation provoque le changement des phases de nitrification et/ou de dénitrification.

10. Procédé selon l'une des revendications 1 à 9, **caractérisé par le fait qu'**une phase de dénitrification dans la zone de nitrification à réguler est immédiatement stoppée lorsque le débit volumique d'alimentation ou d'évacuation de la station d'épuration dépasse une valeur prédéfinie ou lorsque une augmentation du NH₄-N ou du pH est constatée dans l'alimentation ou dans l'évacuation.

11. Procédé selon l'une des revendications 1 à 10, **caractérisé par le fait que**, dans le cas de stations ayant un faible rapport carbone/azote, une commande d'un dosage passif ou actif d'une source de carbone externe ou interne a lieu pour favoriser la dénitrification.

12. Procédé selon l'une des revendications 1 à 11, **caractérisé par le fait qu'**une partie des zones de nitrification est ventilée en permanence et est totalement désactivée dans une autre partie pour une durée de temps déterminée.

13. Procédé selon l'une des revendications 1 à 12, **caractérisé par le fait que**, dans le cas de certains éléments d'aération, en particulier d'aérateurs en céramique, une partie des zones de nitrification est aérée en continu et dans une autre partie l'alimentation en air est limitée à un débit volumique pour une durée déterminée, qui résulte de l'angle d'ouverture minimum nécessaire de l'admission d'air, de telle sorte qu'un ajustement des rapports de la dénitrification simultanée a lieu.

14. Procédé selon l'une des revendications 1 à 13, **caractérisé par le fait que** l'apport d'oxygène pour les zones de nitrification a lieu à des fins d'assistance ou exclusivement par absorption d'oxygène pur ou par voie électrochimique:
